# EUROPÄISCHE PATENTSCHRIFT

(11) **EP 0 832 022 B1**
(45) Veröffentlichungstag und Bekanntmachung des Hinweises auf die Patenterteilung: **13.01.1999**
(21) Anmeldenummer: 96917495.2
(22) Anmeldetag: 04.06.1996
(51) Int. Cl.: B61D 17/12, B62D 25/07

(54) **PERSONENBEFÖRDERUNGSFAHRZEUG**
PERSON TRANSPORT VEHICLE
VEHICULE DE TRANSPORT DE PERSONNES

(30) Priorität: 10.06.1995 DE 19521192
(43) Veröffentlichungstag der Anmeldung: 01.04.1998
(73) Patentinhaber: ABB Daimler-Benz Transportation (Technology) GmbH, 13627 Berlin (DE)
(72) Erfinder: RÖSLER, Jörg, D-90537 Feucht (DE); VEIT-SALOMON, Emil, D-90402 Nürnberg (DE)
(74) Vertreter: Breiter, Achim, Dipl.-Ing.
(86) Internationale Anmeldenummer: EP9602415
(87) Internationale Veröffentlichungsnummer: WO9641740

(56) Entgegenhaltungen:
- EP-A- 0 013 940
- DE-A- 3 608 306
- US-A- 5 066 067
- US-A- 5 333 554

## Beschreibung

Die Erfindung betrifft ein Personenbeförderungsfahrzeug gemäß dem Oberbegriff des ersten Anspruchs 1.

Es ist bei Schienenfahrzeugen ganz allgemein bekannt, einen die zu befördernden Personen aufnehmenden Wagenkasten nach oben mit einem Dachaufbau abzuschließen, der auf den Längsseitenwänden festgesetzt ist. Dabei wird ein Dachabschlußblech üblicherweise durch Verschweißen oder Nieten entlang seines Außenrandes am übrigen Wagenkastenaufbau dicht und dauerhaft festgesetzt. Hierbei tritt im Herstellungsprozeß ein erheblicher Spann- und Richtaufwand auf und es sind nachträglich Maßnahmen zur Schaffung von Kanälen für die Be- und Entlüftung, für Kabel sowie zur Dämmung gegen Schall und Wärmeverluste erforderlich.

Der Erfindung liegt die Aufgabe zugrunde, bei einem Personenbeförderungsfahrzeug gemäß dem Oberbegriff des ersten Anspruchs Maßnahmen zu treffen, durch welche die Herstellung und die Montage in einfacher Weise ausführbar sind.

Die Lösung dieser Aufgabe erfolgt gemäß der Erfindung durch die kennzeichnenden Merkmale des ersten Anspruchs.

Bei einem Aufbau eines Personenbeförderungsfahrzeugs gemäß der Erfindung werden zur Erstellung eines funktionsintegrierten Dachabschlusses an den oberen Seitenrändern der Längsseitenwände des Wagenkastens festgesetzte Langträger als Unterstützung für eine vorgefertigte Dachabschlußplatte herangezogen, die als in sich tragendes Bauteil ausgebildet und mit Kanälen versehen ist, in welchen die für die Be- und Entlüftung des Innenraums des Wagenkastens notwendigen Luftströme geführt und/oder elektrische, hydraulische oder pneumatische Versorgungs- oder Steuerleitungen untergebracht werden können. Die der Be- und Entlüftung dienenden Kanäle weisen dabei zur Fahrgastzelle hin offene Durchbrüche auf und sind zudem in anderen Wandungsabschnitten über Öffnungen mit der Außenatmosphäre bzw. einem zumindestens einen Ventilator enthaltenden Luftkonditioniergerät verbunden. Der oder die der Frischluftversorgung dienenden Kanäle sind dabei im mittleren oder äußeren Bereich der Dachabschlußplatte angeordnet und weisen Ausblasstutzen auf, welche zur Fahrgastzelle hin gerichtet sind und durch eine Deckenverkleidung hindurchragen. Die insbesondere an den äußeren oder inneren Längsseitenrändern befindlichen weiteren, der Abluftführung dienenden Kanäle nehmen dagegen die aus der Fahrgastzelle im Bereich von Fenstern oder Seitenwänden austretende Abluft auf und fuhren sie unmittelbar in die freie Atmosphäre. Während dabei die der Frischluftzuführung dienenden Kanäle an ihren Stirnseiten verschlossen sind, werden die benachbarten Öffnungen der der Abluftführung dienenden Kanäle an den betreffenden Enden stirnseitig jeweils mittels eines Querkanals verbunden, aus dem die Abluft großflächig ausströmen kann. Für die Speisung der der Zuluftführung dienenden Kanäle kann oberhalb der Dachabschlußplatte ein Luftkonditionierungsgerät angeordnet sein, das zumindest einen Ventilator zur Luftförderung, ggf. auch ein Klimagerät enthält und das Zuluft insbesondere in den oder die mittleren Kanäle der Dachabschlußplatte fördert. Das Luftkonditionierungsgerät steht dabei vorzugsweise auf Längstragstegen auf, die sich in Wagenlängsrichtung parallel zu den Längsseitenrändern der Dachabschlußplatte erstrecken und einstückig nach oben aus den an den Seitenwänden festgesetzten Langträgern ausgeformt sind. Das Luftkonditionierungsgerät kann jedoch auch unmittelbar auf der Dachabschlußplatte befestigt werden. Die Längstragstege erhöhen die Steifigkeit der Langträger, wobei der Raum zwischen diesen Längstragstegen für die Unterbringung der Dachabschlußplatte genutzt wird. Das unmittelbar darüber angeordnete Luftkonditionierungsgerät kann dadurch mit einfachen aufgesetzten Anschlußstutzen über angepaßte Öffnungen in der oberen Außenwand der Dachabschlußplatte strömungsmäßig mit den Luftfördereinrichtungen verbunden werden. Die nach unten in die Fahrgastzelle gerichteten Ausblasstutzen der zugehörigen Kanäle werden innerhalb der Fahrgastzelle vorzugsweise von einem Luftumlenkschirm übergriffen, in den eine Beleuchtungseinrichtung integriert ist, deren Abdeckung zugleich den Luftumlenkschirm bilden kann. Vorzugsweise befindet sich in der Dachabschlußplatte im Bereich zwischen diesen Ausblasstutzen eine zur Leuchte hin einseitig offene Aufnahmenut, in welcher vorzugsweise elektrische Versorgungs- und Steuerleitungen gehalten sind. Von besonderem Vorteil ist es, die Dachabschlußplatte aus Kunststoff herzustellen, wobei insbesondere die Außenwand einen höheren Wärmedurchgangswiderstand als die Innenwand aufweisen kann, was durch die Materialdicke oder die Werkstoffauswahl bewerkstelligt werden kann. Die Dachabschlußplatte kann aber auch als mehrschichtige, sandwichartige Platte mit integrierten längs oder quer verlaufenden Kanälen ausgebildet sein. Die Dachabschlußplatte, die nur in ihrem äußeren Randbereich auf den freien Enden der Langträger aufsitzt, kann noch zusätzlich durch Querspriegel unterstützt werden, die von einem Langträger zum anderen reichen und an dem selben oder an der jeweiligen Seitenwand befestigt sind. Die Abschlußplatte kann dabei als Extrudierteil im Kunststoffspritzverfahren oder in Sandwichbauart aus zwei Platten mit senkrechen Trennstegen zur Ausbildung der Kanäle hergestellt sein. Dabei können an die Dachabschlußplatte auch zusätzlich Profile angeformt sein, die zur Befestigung von Geräten, Rohren oder dergleichen dienen können. Außerdem ist die Dachabschlußplatte mit den zugehörigen Gerätschaften und Installationsmitteln unabhängig vom Wagenkasten vormontierbar und braucht dann lediglich mittels eines Krans auf das vorbereitete Fahrzeug gehoben und unter Zwischenlage einer Dichtung entlang des äußeren Auflagerandes an den Langträgern befestigt zu werden. Eine Nachbearbeitung ist dann nicht mehr erforderlich. Dabei kann die Dichtung durch ein gummielastisches Band oder dergleichen oder auch durch einen insbesondere dauerelastischen Klebstoff gebildet werden. Die Abdichtung erfolgt dabei an einer genau definierten Schnittstelle und läßt sich daher problemlos realisieren.

Die Erfindung ist nachfolgend anhand einer Querschnittsdarstellung im Dachbereich des Wagenkastens eines Personenbeförderungsfahrzeugs näher erläutert.

Von einem beispielsweise als Straßenbahnfahrzeug ausgebildeten Personenbeförderungsfahrzeug sind die oberen Abschnitte von äußeren, zumindest weitgehend senkrechten Längsseitenwänden 1 dargestellt, in welchen sich Fenster 2 befinden. Die Längsseitenwände 1 sind zweischalig mit dazwischen angeordneten Stütz-, Wärme- und Schalldämmelementen versehen und weisen eine äußere metallische Wandfläche auf. Im Bereich der oberen Seitenränder der Längsseitenwände 1 ist je ein winkelförmiger Langträger 3 festgesetzt. Ein zumindest annäherend waagerechter Schenkel jedes Langträgers weist zur Fahrzeuglängsmitte hin. Der freie Abstand zwischen den aufeinander zuweisenden Längskanten 4 der waagerechten Schenkel der Langträger 3 wird von einer als selbstständige Baueinheit ausgebildeten Dachabschlußplatte 5 überbrückt, die sich in Richtung der Wagenkastenlängsachse erstreckt und nur mit ihren äußeren Längsrändern auf den sich gegenüberstehenden freien Enden 3a der betreffenden Schenkel wasserdicht abstützt. Als Dichtung kann dabei zwischen die Längsränder und die freien Enden 3a der Langträger eine Dichtungsschnur, -Band oder dergleichen eingelegt werden, es kann jedoch auch ein dauerelastischer Klebstoff als Dichtung zur Anwendung gelangen. Mittels üblicher Spannmittel kann die Dachabschlußplatte 5 mit dem jeweiligen Langträger 3 verspannt werden. Die Dachabschlußplatte 5 ist dann schweißverbindungsfrei wasserdicht an den Langträgern 3 festgesetzt. Die Dachabschlußplatte 5 kann insbesondere einstückig als Strangpreßprofil oder vorzugsweise aus Kunststoff hergestellt werden und dabei mit mehreren in Einbaulage waagerecht nebeneinander in Längsrichtung verlaufenden Kanälen 6 bzw. 7 versehen werden. Wenigstens zwei der Kanäle 6,7, vorliegend alle vier dargestellten sind als Luftführungskanäle ausgebildet und weisen jeweils zumindest einen Durchbruch 8 bzw. 9 auf, die zur im Inneren des Wagenkastens ausgebildeten Fahrgastzelle 10 hin offen sind. Die als Zuluftführung dienenden beiden innenliegenden Kanäle 6 weisen an ihrem jeweiligen Durchbruch 8 einen durch die Deckenverkleidung 11 der Fahrgastzelle 10 hindurchgreifenden Ausblasstutzen 12 auf, denen im Innenraum 10 vor ihren relativ eng nebeneinanderliegenden Ausblasöffnungen ein gemeinsamer Luftumlenkschirm 13 mit integrierter Beleuchtungseinrichtung 14 zugeordnet ist. Zwischen den Ausblasstutzen 12 bzw. den zugehörigen Kanälen 6 befindet sich in einem Trennsteg der Dachabschlußplatte 5 eine zur Beleuchtungseinrichtung 14 hin offene Aufnahmenut 15, in welcher vorzugsweise elektrische Leitungen 16 beispielsweise zur Energieversorgung und Steuerung der Beleuchtungseinrichtung 14 gehalten sind. Aus dem Innenraum 10 der Fahrgastzelle kann Abluft gemäß den Pfeilen 17 beispielsweise im Bereich der Fenster 2 durch die Seitenwände 1 hinter die Deckenverkleidung 11 und von dort durch die Durchbrüche 9 in die weiteren, der Abluftführung dienenden Kanäle 7 der Dachabschlußplatte 5 strömen. Die der Luftzuführung dienenden Kanäle 6 sind in Achsrichtung jeweils beidendig verschlossen und weisen in der Außenwandung 18 der Dachabschlußplatte 5 Öffnungen 19 auf, die über Anschlußstutzen mit einem Luftführungssystem in einem dicht oberhalb der Dachabschlußplatte 5 angeordneten Luftkonditionierungsgerät 20 kommunizieren. Das Luftkonditionierungsgerät 20 fördert aufbereitete Luft gemäß den Pfeilen 21 in den Innenraum 10. Die weiteren, außenliegende Kanäle 7 können in Längsrichtung jeweils beidendig offen sein und sind an diesen Stirnseitenenden jeweils über einen Querkanal miteinander verbunden, aus dem die Abluft in die freie Atmosphäre entweichen kann.

Für die Befestigung des Luftkonditionierungsgerätes 20 sind an den beiden Langträgern 3 im Bereich der freien Schenkelenden 3a nach oben einstückig ausgeformte Längstragstege 3b vorgesehen, die seitlich neben der Dachabschlußplatte 5 entlang verlaufen und auf welchen das Luftkonditionierungsgerät 20, das sich über die gesamte Breite der Dachabschlußplatte 5 erstreckt, abgestützt ist. Diese Längstragstege 3b bewirken zugleich eine Versteifung der Langträger 3 und schaffen in der Höhe den Raum, der für die Unterbringung der Dachabschlußplatte 5 erforderlich ist.

Zur Unterstützung der waagerechten Schenkel 3a,3b der Langträger 3 sowie der Dachabschlußplatte 5 und zur Erhöhung der Wagenkastenstabilität dienen Querspriegel 22, die am nach unten verlaufenden Schenkel der Langträger 3 oder unmittelbar an den jeweiligen Längsseitenwänden 1 festgesetzt sind sowie von einer Längsseitenwand 1 zur anderen Längsseitenwand 1 reichen. Um die Außenwand 18 der Dachabschlußplatte 5 mit erhöhten Schall- und Wärmedämmeigenschaften auszustatten, ist ihre Materialstärke größer als die parallel dazu verlaufende Innenwand 23 der Dachabschlußplatte 5. Ohne Querspriegel 22 können bei ausreichender Eigensteifigkeit und Tragfähigkeit der Dachabschlußplatte 5 entfallen, so daß ihre Innenwand zugleich die sichtbare Deckenwand der Fahrgastzelle bilden kann. Insbesondere können Querspriegel auch in die Dachabschlußplatte 5 zwischen Innen- und Außenwand integriert sein, um den gleichen Effekt zu erzielen, wobei dann die Kanäle 6,7 ebenfalls quer zur Längsrichtung des Wagenkastens gerichtet sein können.

Im übrigen kann die Dachabschlußplatte 5 auch nach Art einer Sandwichplatte aus zwei ursprünglich selbstständigen Innen- bzw. Außenwänden hergestellt werden, zwischen welche senkrechte Trennwände zur Ausbildung und zum äußeren Abschluß der integrierten Kanäle eingefügt und daran festgesetzt werden. Dabei kann die Außenwand aus einem Material mit besonders hoher Schall- und Wärmedämmung gebildet werden. Außerdem befindet sich jeweils zwischen einem Längstragsteg 3b und einer etwa durch die Längsseitenwände 1 bestimmten Ebene ein separater Kabelkanal 23 bzw. 24, in welchen elektrische Kabel 25 für z.B. 24-Volt-Steuer-oder Versorgungszwecke und andererseits Kabel 26 für z.B. 600-Volt-Verbraucher verlegt sind. Dabei liegen die äußeren Wandungen 27 der Kabelkanäle 23,24 vorzugsweise in der durch die Längsseitenwände 1 vorgegebenen Ebene und dienen mit nach oben verlängerten Fortsätzen 28 zur Abdeckung der Dachaufbauten 3b,5,20. Daneben ist es auch möglich, außenliegende Zuluftkanäle und Geräteaufnahmen auf der Dachabschlußplatte vorzusehen.

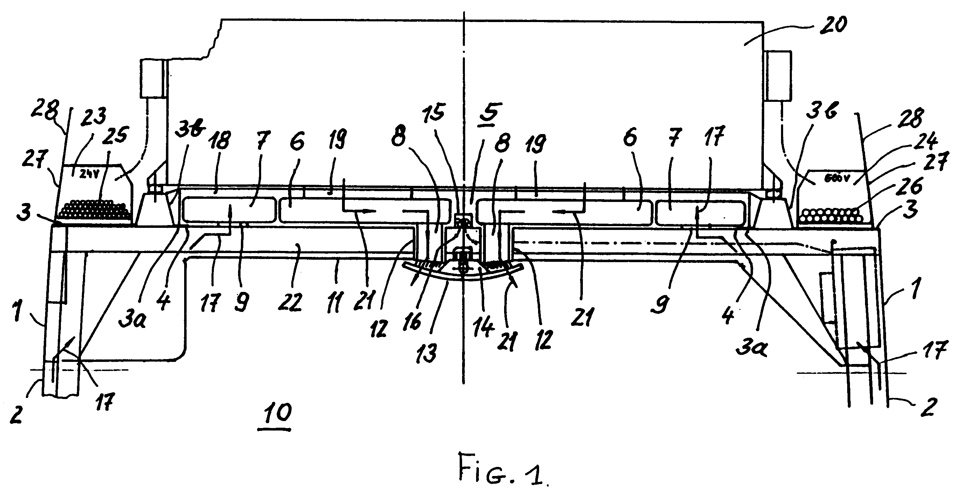

## Patentansprüche

1. Personenbeförderungsfahrzeug, insbesondere Schienenfahrzeug, wie Straßenbahnwagen oder dergleichen, mit einem Wagenkasten, bei dem auf Längsseitenwänden ein Dachaufbau festgesetzt ist, dadurch gekennzeichnet, daß im Bereich der oberen Seitenränder der Längsseitenwände (1) je ein Dachlangträger (3) festgesetzt ist, die mit einem zumindest annäherend waagrechten Schenkel aufeinander zu weisen und daß eine Dachabschlußplatte (5) mit integrierten Kanälen (6,7) an gegenüberliegenden Längsrändern schweißverbindungsfrei und wasserdicht an die freien Schenkelenden (3a) angesetzt ist.

2. Personenbeförderungsfahrzeug nach Anspruch 1, dadurch gekennzeichnet, daß wenigstens zwei Kanäle (6,7) als Luftführungskanäle ausgebildet sind und jeweils zumindest einen Durchbruch (8,9) zum Innenraum (10) des Wagenkastens hin und zumindest eine nach außen gerichtete Öffnung (19) aufweisen.

3. Personenbeförderungsfahrzeug nach Anspruch 2, dadurch gekennzeichnet, daß bei einem Kanal (6) an einem Durchbruch (8) ein in den Innenraum (10) weisender Ausblasstutzen (12) dicht angesetzt ist, der eine Deckenverkleidung (11) eng durchgreift und in den Innenraum (10) ausmündet, während die zugehörige äußere Öffnung (19) in der gegenüberliegenden großen Außenwand (18) dieses Kanals (6) vorgesehen ist.

4. Personenbeförderungsfahrzeug nach Anspruch 2 und 3, dadurch gekennzeichnet, daß mindestens ein weiterer Kanal (7) an wenigstens einem Stirnseitenende in die freie Atmosphäre ausmündet.

5. Personenbeförderungsfahrzeug nach Anspruch 1 oder einem der folgenden, dadurch gekennzeichnet, daß in der Dachabschlußplatte (5) vier parallel zueinander verlaufende Kanäle (6,7) vorgesehen sind, daß die beiden mittleren Kanäle (6) mit in den Innenraum (10) ausmündenden Ausblasstutzen (12) versehen sowie an ihren stirnseitigen Enden verschlossen sind und daß die äußeren Kanäle (7) stirnseitig mittels eines Querkanals verbunden sind, der in die freie Atmosphäre ausmündende Abluftöffnungen aufweist.

6. Personenbeförderungsfahrzeug nach Anspruch 1 oder einem der folgenden, dadurch gekennzeichnet, daß oberhalb der Dachabschlußplatte (5) ein Luftkonditionierungsgerät (20) angeordnet ist, das mit der/den äußeren Öffnungen (19) des/der zugehörigen Kanäle (6) kommuniziert.

7. Personenbeförderungsfahrzeug nach Anspruch 3 oder einem der folgenden, dadurch gekennzeichnet, daß vor den Ausblasöffnungen der Ausblasstutzen (12) ein Luftumlenkschirm (13) mit integrierter Beleuchtungseinrichtung (14) angeordnet ist.

8. Personenbeförderungsfahrzeug nach Anspruch 1 oder einem der folgenden, dadurch gekennzeichnet, daß in der Dachabschlußplatte (5) wenigstens eine einseitig offene Aufnahmenut (15) vorgesehen ist.

9. Personenbeförderungsfahrzeug nach Anspruch 1 oder einem der folgenden, dadurch gekennzeichnet, daß die Langträger (3) einstückig nach oben trapezförmig ausgeformte Längstragstege (3b) aufweisen, die seitlich neben der Dachabschlußplatte (5) verlaufen und auf welchen das Luftkonditionierungsgerät (20) abgestützt ist.

10. Personenbeförderungsfahrzeug nach Anspruch 1 oder einem der folgenden, dadurch gekennzeichnet, daß die Dachabschlußplatte (5) aus Kunststoff besteht.

11. Personenbeförderungsfahrzeug nach Anspruch 10, dadurch gekennzeichnet, daß die Außenwand (18) der Dachabschlußplatte (5) einen höheren Wärmedurchgangswiderstand als die Innenwand (23) aufweist.

12. Personenbeförderungsfahrzeug nach Anspruch 1 oder einem der folgenden, dadurch gekennzeichnet, daß die Dachabschlußplatte (5) auf wenigstens einem Querspriegel (22) ruht, der von einem zum anderen Langträger (3,3) bzw. von einer zur anderen Längsseitenwand (1,1) reicht.

13. Personenbeförderungsfahrzeug nach Anspruch 1 oder einem der folgenden, dadurch gekennzeichnet, daß die Dachabschlußplatte (5) aus einer Innenwand und einer Außenwand mit dazwischen eingefügten sowie daran festgesetzten senkrechten Trennwänden aufgebaut ist.

14. Personenbeförderungsfahrzeug nach Anspruch 1 oder einem der folgenden, dadurch gekennzeichnet, daß parallel zu wenigstens einem Längstragsteg (3b) ein Kabelkanal (23,24) auf der der Dachabschlußplatte (5) abgewandten Seite vorgesehen ist.

15. Personenbeförderungsfahrzeug nach Anspruch 1 oder einem der folgenden, dadurch gekennzeichnet, daß zumindest die der Luftführung dienenden Kanäle (6,7) als Längskanale zumindest annähernd parallel zu den Längsseitenrändern der Dachabschlußplatte (5) verlaufen.

16. Personenbeförderungsfahrzeug nach Anspruch 1 oder einem der folgenden, dadurch gekennzeichnet, daß zumindest die der Luftführung dienenden Kanäle (6,7) zumindest annähernd parallel zu Querseitenrändern der Dachabschlußplatte (5) verlaufen.

## Claims

1. Passenger-carrying vehicle, in particular a rail vehicle such as a tramcar or, the like, having a vehicle body with a roof superstructure mounted on the longitudinal side walls, characterized in that longitudinal roof girders (3) are fixed in the area of each of the upper side edges of the longitudinal side walls (1), facing one another with at least approximately horizontal flanges, and that a roof sealing panel (5) with integral ducts (6, 7) is fitted on to opposite longitudinal edges at the flange ends (3a), so as to be watertight and without welds.

2. Passenger-carrying vehicle according to claim 1, characterized in that at least two ducts (6, 7) are designed as air ducts, each having one or more openings (8, 9) to the interior (10) of the vehicle body and one or more openings (19) directed outwards.

3. Passenger-carrying vehicle according to claim 2, characterized in that there is fitted with sealing to one duct (6) at an opening (8), a blower nozzle (12) directed into the interior (10), which passes tightly through a ceiling panel (11) and emerges in the interior (10), while the associated outer opening (19) is provided in the opposite large outer wall (18) of this duct (6).

4. Passenger-carrying vehicle according to claims 2 and 3, characterized in that at least one further duct (7) emerges into the open air at one or more ends.

5. Passenger-carrying vehicle according to claim 1 or any of the following, characterized in that four parallel ducts (6, 7) are provided in the roof sealing panel (5), that the two centre ducts (6) are provided with blower nozzles (12) directed into the interior (10) and are sealed at their ends, and that the outer ducts (7) are connected at their ends by means of a transverse duct, which has air outlet vents discharging into the open air.

6. Passenger-carrying vehicle according to claim 1 or any of the following, characterized in that there is mounted above the roof sealing panel (5) an air conditioning unit (20), which communicates with the outer vent(s) (19) of the associated duct(s) (6).

7. Passenger-carrying vehicle according to claim 3 or any of the following, characterized in that an air deflection shield (13) with integral light fitting (14) is mounted in front of the blower vents of the blower nozzles (12).

8. Passenger-carrying vehicle according to claim 1 or any of the following, characterized in that at least one location channel (15), open on one side, is provided in the roof sealing panel (5).

9. Passenger-carrying vehicle according to claim 1 or any of the following, characterized in that the longitudinal roof girders (3) have one-piece longitudinal support webs (3b), shaped trapezoidally upwards, running along the side of the roof sealing panel (5) and on which the air conditioning unit (20) is supported.

10. Passenger-carrying vehicle according to claim 1 or any of the following, characterized in that the roof sealing panel (5) is made of plastic.

11. Passenger-carrying vehicle according to claim 10, characterized in that the outer wall (18) of the roof sealing panel (5) has a greater heat transfer resistance than the inner wall (23).

12. Passenger-carrying vehicle according to claim 1 or any of the following, characterized in that the roof sealing panel (5) rests on one more transverse roof arches (22), which extend from one to the other longitudinal girder (3, 3) and from one to the other longitudinal side wall (1, 1) respectively.

13. Passenger-carrying vehicle according to claim 1 or any of the following, characterized in that the roof sealing panel (5) is made up of an inner wall and an outer wall with vertical partition walls inserted between and fixed to them.

14. Passenger-carrying vehicle according to claim 1 or any of the following, characterized in that a cable duct (23, 24) is provided on one or more longitudinal support webs (3b) on the side facing away from the roof sealing panel (5).

15. Passenger-carrying vehicle according to claim 1 or any of the following, characterized in that at least the ducts (6, 7) used for air run as longitudinal ducts at least approximately parallel to the longitudinal side edges of the roof sealing panel (5).

16. Passenger-carrying vehicle according to claim 1 or any of the following, characterized in that at least the ducts (6, 7) used for air run at least approximately parallel to the transverse side edges of the roof sealing panel (5).

## Revendications

1. Véhicule pour le service des voyageurs, en particulier véhicule ferroviaire, tel qu'une voiture de tramway ou analogues, comportant une caisse de voiture, dans laquelle une structure de toit est fixée sur les parois de face latérale, caractérisé en ce que dans la zone de chacun des bords latéraux supérieurs des parois de face latérale (1) est fixée une longrine longitudinale de toit (3), lesquelles longrines, par une branche au moins approximativement horizontale, sont en regard l'une de l'autre, et qu'une plaque d'obturation de toit (5), comportant des gaines intégrées (6, 7) sont, au niveau des bords longitudinaux opposés, rapportés sans assemblage soudé et d'une manière étanche à l'eau aux extrémités libres (3a) des branches.

2. Véhicule pour le service des voyageurs selon la revendication 1, caractérisé en ce qu'au moins deux gaines (6, 7) sont configurées comme étant des gaines pour le passage de l'air, et chacune d'entre elles possède au moins une traversée (8, 9) allant vers l'espace intérieur (10) de la caisse de voiture, et au moins une ouverture (19) dirigée vers l'extérieur.

3. Véhicule pour le service des voyageurs selon la revendication 2, caractérisé en ce que, pour ce qui concerne une gaine (6), une tubulure d'échappement (12), dirigée vers l'espace intérieur (10), est rapportée d'une manière étanche à une traversée (8), tubulure qui traverse avec un ajustement serré un revêtement de plafond (11) et débouche dans l'espace intérieur (10), tandis que l'ouverture extérieure correspondante (19) est prévue dans la grande paroi extérieure (18), opposée, de cette gaine (6).

4. Véhicule pour le service des voyageurs selon la revendication 2 ou 3, caractérisé en ce qu'au moins un autre canal (7), disposé au niveau d'au moins une extrémité côté frontal, débouche à l'air libre.

5. Véhicule pour le service des voyageurs selon la revendication 1 ou l'une des revendications suivantes, caractérisé en ce que dans la plaque d'obturation de toit (5) sont prévues quatre gaines (6, 7) courant parallèlement l'une à l'autre ; que les deux gaines centrales (6) sont pourvues de tubulures d'échappement (12) qui débouchent dans l'espace intérieur (10), et sont obturées au niveau de leurs extrémités côté frontal ; et que les gaines extérieures (7) sont reliées côté frontal à l'aide d'une gaine transversale, qui comporte des ouvertures d'air d'échappement qui débouchent à l'air libre.

6. Véhicule pour le service des voyageurs selon la revendication 1 ou l'une des revendications suivantes, caractérisé en ce qu'au-dessus de la plaque d'obturation de toit (5) est disposé un appareil de conditionnement d'air (20), qui communique avec la ou les ouvertures extérieures (19) de la ou des gaines correspondantes (6).

7. Véhicule pour le service des voyageurs selon la revendication 3 ou l'une des revendications suivantes, caractérisé en ce que, en avant des orifices d'échappement des tubulures d'échappement (12), un écran déflecteur d'air (13) est disposé, qui comporte une installation d'éclairage intégrée (14).

8. Véhicule pour le service des voyageurs selon la revendication 1 ou l'une des revendications suivantes, caractérisé en ce que dans la plaque d'obturation de toit (5) est prévue au moins une rainure de positionnement ouverte sur un côté.

9. Véhicule pour le service des voyageurs selon la revendication 1 ou l'une des revendications suivantes, caractérisé en ce que les longrines longitudinales (3) comportent des traverses porteuses longitudinales (3b), constituées d'une pièce et ayant la configuration d'un trapèze dirigé vers le haut, traverses qui courent latéralement à côté de la plaque d'obturation de toit (5), et sur lesquelles s'appuie l'appareil de conditionnement d'air (20).

10. Véhicule pour le service des voyageurs selon la revendication 1 ou l'une des revendications suivantes, caractérisé en ce que la plaque d'obturation de toit (5) est en un matériau plastique.

11. Véhicule pour le service des voyageurs selon la revendication 10, caractérisé en ce que la paroi extérieure (18) de la plaque d'obturation de toit (5) présente une résistance à la transmission de chaleur plus grande que la paroi intérieure (23).

12. Véhicule pour le service des voyageurs selon la revendication 1 ou l'une des revendications suivantes, caractérisé en ce que la plaque d'obturation de toit (5) s'appuie sur au moins un arceau transversal (22), qui va d'une longrine longitudinale (3,3) à l'autre ou d'une paroi de face latérale (1,1) à l'autre.

13. Véhicule pour le service des voyageurs selon la revendication 1 ou l'une des revendications suivantes, caractérisé en ce que la plaque d'obturation de toit (5) est constituée d'une paroi intérieure et d'une paroi extérieure, des cloisons verticales étant insérées entre elles et y étant fixées.

14. Véhicule pour le service des voyageurs selon la revendication 1 ou l'une des revendications suivantes, caractérisé en ce que, parallèlement à au moins une traverse porteuse longitudinale (3b), on prévoit un caniveau de câbles (23, 24) sur le côté opposé à la plaque d'obturation de toit (5).

15. Véhicule pour le service des voyageurs selon la revendication 1 ou l'une des revendications suivantes, caractérisé en ce qu'au moins les gaines (6, 7) servant au passage de l'air courent, en tant que gaines longitudinales, d'une manière au moins approximativement parallèle aux bords latéraux longitudinaux de la plaque d'obturation de toit (5).

16. Véhicule pour le service des voyageurs selon la revendication 1 ou l'une des suivantes, caractérisé en ce qu'au moins les gaines (6, 7) servant au passage de l'air courent d'une manière au moins approximativement parallèle aux bords latéraux transversaux de la plaque d'obturation de toit (5).
